(19) Europäisches Patentamt
European Patent Office
Office européen des brevets

(11) Publication number: 0 359 273 A2

(12) # EUROPEAN PATENT APPLICATION

(21) Application number: 89117063.1

(51) Int. Cl.5: C08G 18/50

(22) Date of filing: 14.09.89

(30) Priority: 15.09.88 IT 2194588

(43) Date of publication of application:
21.03.90 Bulletin 90/12

(84) Designated Contracting States:
BE DE ES FR GB NL SE

(71) Applicant: AUSIMONT S.r.l.
31, Foro Buonaparte
I-20100 Milano(IT)

(72) Inventor: Re, Alberto, Dr.
18, via Castelmorrone
I-20129 Milan(IT)
Inventor: Giavarini, Francesco
3, via Puccini
I-24060 Castelli Calepio Bergamo(IT)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
D-8000 München 40(DE)

(54) **Fluorinated polyurethanes containing polyoxyperfluoroalkylene blocks.**

(57) Polyurethanes comprising rubber-like polyoxyperfluoroalkylene blocks and rigid segments derived from low molecular weight compounds and from (cyclo)aliphatic or aromatic diisocyanates, wherein the number of rigid segments is higher than the number of rubber-like blocks, are described. Said polyurethanes are characterized by a glass transition temperature lower than -80° C, a tensile strength higher than 30 kg/cm$^2$ and a hardness of from 50 Shore A to 75 Shore D, and show good thermoforming characteristics.

EP 0 359 273 A2

## FLUORINATED POLYURETHANES CONTAINING POLYOXYPERFLUOROALKYLENE BLOCKS

The present invention relates to fluorinated polyurethanes, particularly, polyurethanes containing rubber-like and rigid blocks.

One object of the present invention is to provide fluorinated polyurethanes having a low glass transition temperature (Tg even lower than -110 °C) and good mechanical properties, which may be used for structural applications under severe working conditions.

Polyurethanes (PU) which comprise polyoxyperfluoroalkylene blocks derived from perfluoropolyethers (PFPE) having hydroxylated end groups are known.

Products of this type are described, in particular, in Italian patent No. 903 446 and are characterized by a Tg lower than -80 °C, wherefore they retain their flexibility and elastic properties even at very low temperatures.

The structure of these materials, which predominantly is characterized by the perfluoropolyether chain, however, entails, a poor mechanical strength. In order to overcome this drawback, it is necessary to give them a threedimensional structure by crosslinking them either by means of trifunctional chemical agents or through the formation of allophanate or isocyanurate.

The materials thus obtained, however, do not possess an optimal combination of mechanical characteristics as regards hardness, tensile strength, modulus of elasticity and elongation. In particular, the hardness values are lower than 50 Shore A and the tensile strength values are, generally, lower than 10 $kg/cm^2$. Furthermore, since these materials are crosslinked, they cannot be processed according to methods typically used for thermoplastic materials such as extrusion, injection moulding and blow moulding.

Said products also involve the problem of processing waste which cannot be converted and, therefore, cannot be re-used.

A substantial improvement in the combination of the mechanical properties of said products has been achieved by incorporating therein encumbering blocks consisting of aromatic or cycloaliphatic diols, according to the process described in EP-A-192 190.

The fluorinated polyurethanes obtained through this process are characterized by a numerical ratio of blocks derived from the aromatic or cycloaliphatic diol to perfluoropolyether blocks of $\leq 1$. The resulting materials, however, do not show very high tensile strength values. In most cases said values are not higher than 25 $kg/cm^2$. In order to obtain higher values it is necessary to use bisphenols at a high ratio, of the order of 1 (see example H of the above patent). In this case, the presence of the aromatic diols in the polymeric structure is a limitation to the use of said materials at high temperatures. Furthermore, the elastomeric properties at low temperatures become impaired since, in spite of the low Tg, the modulus of elasticity is too high for the usual applications of rubbers.

It is, thus, an object of the present invention to provide fluorinated polyurethanes having a glass transition temperature lower than -80 C and being characterized by hardness values ranging from 50 Shore A to 75 Shore D and by tensile strength values equal to or higher than 30 $kg/cm^2$.

The polyurethane elastomers according to the present invention (which, preferably, have an average molecular weight of from about 25000 to about 250000 and, particularly, of from about 50000 to about 150000) have a structure which comprises alternating rubber-like blocks (i.e. blocks showing rubber-like properties) and rigid blocks.

The rubber-like blocks are composed of polyoxyperfluoroalkylene chains while the rigid blocks, which influence and characterize the mechanical properties of the polymers, may be obtained by using, as starting materials, difunctional compounds not containing perfluoropolyether or polyether (polyether polyol) chains, said difunctional compounds being selected from low molecular weight diols of the cycloaliphatic hydrogenated (i.e. non-fluorinated) or fluorinated type.

In the polyurethanes according to the present invention (which, preferably, have an average molecular weight of from about 25000 to about 250000, particularly of from about 50000 to about 150000), the numerical ratio of rigid blocks to rubber-like blocks is always higher than 1 and, preferably, is >1.2. Preferably, said ratio ranges from about 1.2 to about 4.5.

In this way it is possible to obtain thermoplastic fluorinated polyurethanes which can be processed according to technologies typically employed with thermoplastic materials.

A part of the difunctional short-chain ($C_2$-$C_{12}$) molecules may have a functionality of >2, resulting in crosslinked products having the mechanical properties described above.

In the polyurethanes according to the present invention the rubber-like blocks are composed of sequences of oxyperfluoroalkylene units preferably having an average molecular weight of from about 1500 to about 15000, particularly from about 2000 to about 6000. As starting materials, the rubber-like blocks are,

preferably, derived from perfluoropolyether diols belonging to the following classes of compounds:

a) $HO-(CH_2CH_2O)_z-CH_2-CF_2O-(C_2F_4O)_m(CF_2O)_n-CF_2-CH_2-(OCH_2CH_2)_z-OH$

wherein z independently ranges from 0 to 3 (extremes included) and the ratio m/n ranges from 0.2 to 2, preferably from 0.5 to 1.2, m and n having values such that the molecular weight is within the range indicated above;

b) $HO-CH_2CF_2-(C_3F_6O)_r(C_2F_4O)_s(CFXO)_t-CF_2CH_2-OH$

wherein:

X = F or $CF_3$; r, s and t are independently 0 or represent integers of from 1 to 100, with the proviso that (r+s) is different from 0 and that r, s and t have values such that the molecular weight is within the range defined above;

c) $HOCH_2F_2CH_2-(OCF_2CF_2CH_2)_p-OR_fO-(CH_2CF_2CF_2O)_q-CH_2CF_2CH_2OH$

wherein:

$R_f$ represents a fluoroaliphatic group, preferably a perfluoroalkylene group, also containing heteroatoms (preferably from 2 to 4 O and/or N atoms) in the chain, said fluoroaliphatic group, particularly when $R_f$ is a perfluoroalkylene group, containing from 1 to 21, preferably from 1 to 4, carbon atoms in the chain; and p and q each are integers of from 1 to 100, with the proviso that (p+g) >2 and $R_f$, p and q are such that the molecular weight is within the range defined above;

d)

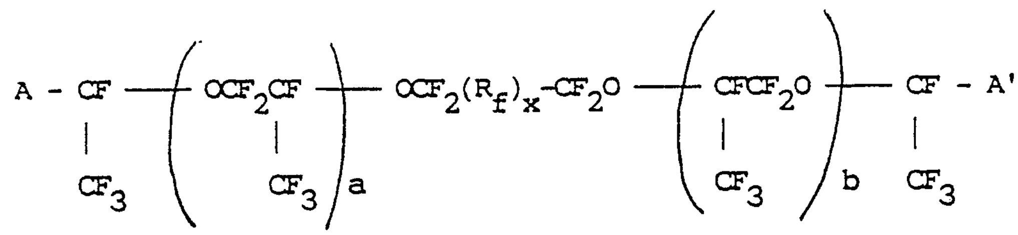

wherein:

$R_f$ represents a fluoroaliphatic group as defined above for structure c), A and A′ each represent an end group containing one or more -OH groups, preferably a $-CH_2OH$ group, x is 0 or 1, a and b each are integers of from 1 to 100, with the proviso that (a+b) >2 and that $R_f$, x, a and b are such that the molecular weight is within the range defined above.

The diols of type a) are described in Italian patent 903 446. The diols of type b) are preparable according to the methods described in US-A-3 847 978 and 3 810 874, starting from the fluorides of the diacids described in US-A-3 665 041.

The diols of type c) can be obtained by reduction of the diacyl fluorides described in EP-A-148 482.

The diols of group d) are described in EP-A-151 877.

It is also possible to use diols with repeating units of formulae $-CF_2CF_2O-$, $-CF_2CF_2CF_2O-$ and $-CF(CF_3)CF_2O-$. These products are preparable according to the process described in US-A-4 720 527.

As starting material, the perfluoropolyether blocks can also be derived from perfluoropolyethers with perfluorooxyalkylene chains of the type described above, wherein both of the end groups are isocyanate groups. Compounds of this type are described in US-A-3 810 874.

The rubber-like blocks may also, in part, be composed of hydrogenated (i.e. non-fluorinated) polyols, both of the polyester polyol type and of the polyether polyol type. Examples thereof are poly(ethylene glycol), poly(propylene glycol), poly(tetramethylene glycol), poly(1,4-butanediol adipate), poly(ethanediol-1,4-butanediol adipate), poly(1,6-hexanediol-neopentyl glycol adipate), poly($\epsilon$-caprolactam) and poly(1,6-hexanediol carbonate).

In the polyurethanes according to the present invention the rigid blocks (preferably having an average molecular weight of from about 80 to about 1000 and, particularly, from about 100 to about 500) result from the use of components of the following class:

Low molecular weight hydrogenated (non-fluorinated) or fluorinated cycloaliphatic diols (preferably containing 6 to 16 carbon atoms):

Examples of hydrogenated diols are:

1,4-bis-hydroxymethylcyclohexane, 1,4-bis-hydroxyethylcyclohexane.

Examples of diisocyanates utilizable for preparing the polyurethanes of the present invention are aromatic diisocyanates (preferably having 6 to 18 carbon atoms in the basic skeleton) such as, for example, 2,4- or 2,6-toluene diisocyanate, xylylene diisocyanate, 4,4′-diphenylmethane diisocyanate, naphthalene-1,5-diisocyanate and p-phenylene diisocyanate; and (cyclo)aliphatic diisocyanates (preferably having 2 to 20 and, particularly, 4 to 18 carbon atoms in the basic skeleton) such as, for example, hexamethylene diisocyanate, isophorone diisocyanate, 4,4′-dicyclohexylmethane diisocyanate and cyclohexyl-1,4-diisocyanate. Said diisocyanates may, also, be of the fluorinated type such as, for example, tetrafluorophenylene diisocyanate or 6-chloro-2,4,5-trifluorobenzene-1,3-diisocyanate.

As mentioned before, it is also possible to use a perfluoropolyether diisocyanate along with a non-perfluoropolyether diisocyanate of the type indicated above.

The polyurethanes of the present invention can be obtained in a more or less crosslinked state by additionally using for their preparation crosslinking agents, i.e., reagents having a functionality higher than 2. Examples of such reagents are trimethylol propane, glycerine, diethylene triamine, tertiary amine compounds of the type described in EP-A-291 855 and tri- or polyisocyanates such as hexamethylene diisocyanate trimer (Desmodur$^{(R)}$ N) and toluene diisocyanate trimer (Desmodur$^{(R)}$ IL).

Preparation of the polyurethanes

The fluorinated polyurethanes of the present invention can, advantageously, be prepared by operating in two steps (prepolymer method):

First step Prepolymer synthesis

The perfluoropolyether macroglycol, optionally dissolved in a suitable solvent, is reacted with excess diisocyanate so that the ratio NCO/OH groups is, for example, ≥2, thereby obtaining an isocyanate-terminated prepolymer.

This step can be omitted if a fluorinated diisocyanate having a PFPE structure is utilized.

Second Step Chain Extension

The procedure to be followed for carrying out the second step depends on the type of material to be obtained (thermoplastic or thermosetting).

A. Thermoplastic polyurethanes:

The second step can be conducted either in solution or in mass. In the former case, the isocyanate prepolymer solution or the perfluoropolyether diisocyanate dissolved in a suitable solvent, optionally containing a non-perfluoropolyether diisocyanate, is reacted, at 20 to 70 °C, with the cycloaliphatic diol in order to obtain an NCO/OH ratio equal to about 1. The rigid blocks composed of the diol-derived units will be present in the structure of the final polymer obtained in a numerical ratio of <1 with respect to the rubber-like blocks composed of perfluoropolyether chains.

The reaction time usually ranges from 1 to 8 hours. The progress of the reaction may be followed by means of I.R. spectroscopy, monitoring the disappearance of the NCO band at 2270 $cm^{-1}$. Upon completion of the reaction, the polymer may be precipitated with excess $H_2O$ and, after a few further washings with $H_2O$, filtered and vacuum dried.

In the latter case, the isocyanate prepolymer, after removal of the solvent, or the perfluoropolyether diisocyanate, optionally also containing a non-perfluoropolyether diisocyanate, is reacted at 20 to 120 °C with the cycloaliphatic diol in order to obtain an NCO/OH ratio resulting in the formation of chains as defined above.

Generally, the reaction time ranges from 1 to 8 hours. The progress of the reaction may be followed by means of I.R. spectroscopy as described above. Upon completion of the reaction, the polymeric and highly viscous mass may be extruded and pelletized.

B. Thermosetting polyurethanes

The second step is conducted by reacting the isocyanate prepolymer with a mixture consisting of:

- a low molecular weight cycloaliphatic diol and
- a crosslinking agent.

In said mixture , the short-chain molecule/crosslinking agent equivalent ratio may range from about 0.5 to about 5 and, preferably, is equal to about 1.

The reaction may be conducted in mass by mixing the components at 50 to 120 °C and then pouring the mixture into a mould.

Crosslinking usually occurs at 20 to 120 °C during a period of time varying from 1 to 24 hours.

Alternatively, the thermosetting polyurethane can be prepared by starting from an -OH-terminated prepolymer (prepared by adding the cycloaliphatic diol to the -NCO-terminated prepolymer of the first step) and by subsequent crosslinking with a triisocyanate (or polyisocyanate).

The yield of the fluorinated polyurethane synthesis reaction can be raised by adding a suitable catalyst system such as, for example, tin derivatives (for example, dibutyl tin dilaurate, dibutyl tin acetate, dibutyl tin oxide), iron derivatives (such as ferroacetylacetonate), titanium alcoholates (such as titanium tetraisopropylate) and tertiary amines (such as triethylamine or N-methyl morpholine), in amounts ranging from about 0.001 to about 2% by weight, preferably from about 0.01 to about 0.5% by weight, based on the total weight.

The fluorinated polyurethanes according to the present invention are thermoplastic elastomers characterized by the following properties:

- Tensile strength equal to at least 30 $kg/cm^2$,
- Hardness ranging from 50 Shore A to 75 Shore D,
- Excellent flexibility at very low temperatures, even lower than -100 °C,
- Resistance to hydrolytic degradation and to attack by most of the usual chemical agents, oils and fats,
- Good surface properties such as smoothness (self-lubrication) and oil and water repellency,
- Excellent optical properties (low refractive index) and
- Excellent dielectric properties.

The fluorinated polyurethanes can be formulated by adding thereto, for example, conventional fillers and usual pigments, antioxidants, U.V. stabilizers and reinforcing fillers such as carbon black, stearic acid and graphite. Furthermore, owing to a sufficient fluorine content, they are compatible with fillers such as fluorinated polymers, in particular, polytetrafluoroethylene.

## Applications

The fluorinated polyurethanes of the present invention may be used in the manufacture of structural elements such as gaskets, couplings, components for valves and fittings, insulating and protective membranes, adhesives and sealing agents to be used under very severe conditions, in particular, where the elastomeric properties must be retained at very low temperatures (arctic rubbers).

Particularly interesting fields of use are, therefore, the aeronautical, aerospace, oil and chemical industries.

Another possible application in the field of thermoplastics is represented by the use as soluble resins, characterized by a high film-forming power and coating power, for use in the electronic industry as conformable coatings having excellent resistance to chemical agents and very good optical and dielectric properties.

The polyurethanes of the present invention may, furthermore, be employed as components of paint formulations, characterized by a high oil and water repellency, a low critical surface tension and a low friction coefficient, for use in the textile, leather, marine, naval and aeronautical sectors.

Another possible application of particular interest is their use in the protection and lubrication of surfaces subjected to friction and wear such as, for example, magnetic recorders and accessories for cassettes containing magnetic tapes.

Still another possible application of particular interest is the use in structural materials to be used in the biomedical field, for the manufacture of artificial organs, artificial blood vessels, membranes and structural materials which must be endowed with excellent mechanical and anti-thrombosis properties and resistance to degradation.

## Characterization of the polyurethanes

The fluorinated polyurethanes have been characterized according to the following standards.

| | |
|---|---|
| - Hardness (Shore A and Shore D) | ASTM 2240 |
| - Tensile properties (tensile strength (T.S.) and 100% modulus (M 100%)) | ASTM D 412 |
| - Elongation at break (%) (E.B.) | ASTM D 412 |
| - Tg by means of differential scanning calorimetry (D.S.C.) | |

The following examples are given to illustrate the invention and are not to be understood as a limitation of possible embodiments thereof.

Delifrene(R), used in the examples, is trichlorotrifluoroethane, produced by Montefluos.

## EXAMPLE 1

Synthesis of an isocyanate-terminated prepolymer by reaction of a perfluoropolyether diol with a diisocyanate.

A perfluoropolyether of class a), wherein z = 0, (ZDOL MW 4000) with $-CH_2OH$ end groups and having an equivalent weight of 2103 and, as isocyanate, 4,4′-dicyclohexylmethane diisocyanate, were used. The preparation was conducted in solution.

7.8 g of diisocyanate, dissolved in 30 ml of a Delifrene(R)/tetrahydrofuran (THF) mixture (1:1) were introduced into a four-neck flask equipped with stirrer, reflux condenser and dropping funnel and connected to a nitrogen storage tank. The temperature was raised to 50 °C and, in a nitrogen atmosphere, 50 g of diol were added dropwise. The reaction was continued at the above temperature until the desired conversion (2.59% by weight of NCO groups) was reached (after about 3 hours). The reaction mixture was then cooled in order to stop the reaction. After removal of the solvent, the prepolymer was isolated in the form of a colourless and highly viscous liquid.

## EXAMPLE 2

The preparation of a polyurethane of the present invention by means of a reaction in solution is described in this example.

A solution of 60 g of the prepolymer of example 1, dissolved in 30 ml of a Delifrene (R)/THF mixture (1:1), was introduced into a flask equipped with stirrer and connected to an $N_2$ storage tank. The solution was heated to 55 °C and, after intense stirring, 2.66 g of 1,4-bis-hydroxymethylcyclohexane (BHCE), dissolved in 10 ml of THF, were added dropwise to the solution. The reaction was monitored by means of I.R. spectroscopy, following the decrease of the NCO band at 2270 $cm^{-1}$. After 6 hours, when the degree of polymerization to be obtained had been reached, the polymer was precipitated with 1 liter of $H_2O$. The precipitate was repeatedly washed with $H_2O$, filtered and dried for 12 hours under vacuum at 60 °C.

At the end, the polymer was obtained in the form of a granular, light-coloured solid.

The polymer was placed into a 120x120x2 mm mould and was then moulded at 160 °C by means of a press. A small, transparent plate of thermoplastic polyurethane was obtained, the mechanical properties of which are reported in table 1.

## EXAMPLE 3

This example illustrates the preparation of a polyurethane of the present invention by means of reaction in mass of the prepolymer and a chain extender.

2.52 g of 1,4-bis-hydroxymethyl-cyclohexane (previously dried) were added to 60 g of the prepolymer of example 1 at a temperature of 80 °C in a reactor equipped with a bottom discharge.

The resulting mixture was vigorously stirred in a nitrogen atmosphere. The progress of the reaction was followed by means of I.R. spectroscopy (disappearance of the signal at 2270 $cm^{-1}$) as well as by monitoring the viscosity increase. After one hour the temperature was raised to 120 °C and, after a further 45 minutes, i.e., after having reached the desired degree of polymerization, vacuum as applied in order to strip off the gases from the mixture, which was then extruded and pelletized. In order to obtain a

characterizable test piece, the pellets were put into a 120x120x2 mm mould and were then moulded by means of a press.

A small, transparent thermoplastic polyurethane plate was obtained. After post-curing at 100 °C for 12 hours, the mechanical properties indicated in table 1 were determined.

## EXAMPLE 4

Preparation of a crosslinked polyurethane.

80 g of the prepolymer prepared according to example 1, but using isophorone diisocyanate in a 3/1 molar ratio with respect to the perfluoropolyether diol, were reacted, in a reactor equipped with mechanical stirrer and provided with a bottom discharge, with a mixture consisting of 2.2 g of 1,4-bis-hydroxymethyl-cyclohexane and 1.35 g of 1,1,1-tris-(hydroxymethyl)-propane (THP) at a temperature of 80 °C under intense stirring and maintaining a nitrogen flow. After 20 minutes, the temperature was brought to 120 °C and the fluid mass was degassed and poured into a 120x120x2 mm mould. After crosslinking at 120 °C for 4 hours, the mechanical properties reported in table 1 were determined.

TABLE 1

| EXAMPLE | PREPOLYMER (ref. ex.) | chain extender | % b.weight chain extender | Tg (° C) | hardness (Shore A) | $M_{100\%}$ ($kg/cm^2$) | Tensile strength ($kg/cm^2$) | Elongation at break (%) |
|---|---|---|---|---|---|---|---|---|
| 2 | 1 | BHCE | 4.24 | -115 | 70 | 28 | 32 | 140 |
| 3 | 1 | BHCE | 4.03 | -112 | 63 | 25 | 32 | 223 |
| 4 | 1 modified | BHCE + THP | 4.25 | -115 | 69 | 41 | 84 | 310 |

**Claims**

1. Polyurethanes comprising rubber-like polyoxyperfluoroalkylene blocks and rigid blocks or segments derived from low molecular weight compounds, optionally fluorinated, the number of the rigid blocks being higher than the number of the rubber-like blocks, said polyurethanes being prepared by using aliphatic, cycloaliphatic and/or aromatic diisocyanates and/or perfluoropolyether diisocyanates.

2. Polyurethanes according to claim 1, wherein the rubber-like blocks are composed of sequences, having an average molecular weight of from about 1500 to about 15000, of one or more oxyperfluoroalkylene units derived from perfluoropolyether diols belonging to the following classes of compounds:

a) $HO-(CH_2CH_2O)_z-CH-CF_2O-(C_2F_4O)_m(CF_2O)_n-CF_2-CH_2-(OCH_2CH_2)_z-OH$

wherein z independently ranges from 0 to 3 and the ratio m/n is from 0.2 to 2, m and n having values such that the molecular weight is within the range indicated above;

b) $HO-CH_2CF_2-(C_3F_6O)_r(C_2F_4O)_s(CFXO)_t-CF_2CH_2-OH$

wherein:

X = F or $CF_3$; r, s, t independently are 0 or integers of from 1 to 100, with the proviso that (r + s) is different from 0 and r, s and t have values such that the molecular weight is within the above range;

c) $HOCH_2CF_2CH_2-(OCF_2CF_2CH_2)_p-OR_f-O-(CH_2CF_2CH_2O)_qCH_2CF_2CH_2OH$

wherein:

$R_f$ represents a fluoroaliphatic group containing heteroatoms in the chain, p and q each are integers of from 1 to 100, with the proviso that (p + q) >2 and that $R_f$, p and q are such that the molecular weight is within the above range;

d)

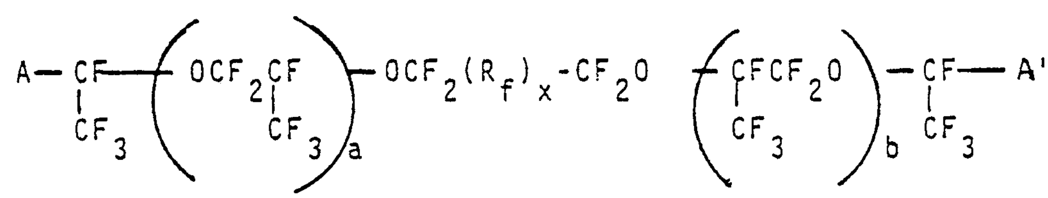

wherein:

$R_f$ is a fluoroaliphatic group as defined under c), A and A′ are end groups containing -OH, x is 0 or 1 and a and b each are integers of from 1 to 100, with the proviso that (a + b) >2 and that $R_f$, x, a and b are such that the molecular weight is in the above range.

3. Polyurethanes according to any one of claims 1 and 2, which are crosslinked and are obtainable by utilizing, for their preparation, polyols and/or amines and/or isocyanates having a functionality of higher than 2.

4. Polyurethanes according to any one of claims 1 to 3, wherein the rubber-like blocks are composed of sequences, having a molecular weight from about 1500 to about 15000, of one or more oxyperfluoroalkylene units derived from perfluoropolyether diisocyanates or belonging to the perfluoropolyether classes indicated in claim 2.

5. Polyurethanes according to any one of claims 1 to 4, wherein the numerical ratio of rigid segments to rubber-like blocks is equal to at least 1.2.

6. Polyurethanes according to any one of claims 1 to 5, prepared from 1,4-bis-hydroxymethyl-cyclohexane.

7. Polyurethanes according to any one of claims 1 to 5, prepared from 1,4-bis-hydroxyethyl-cyclohexane.